# EUROPEAN PATENT SPECIFICATION

(11) **EP 3 544 408 B1**
(45) Date of publication and mention of the grant of the patent: **21.10.2020**
(21) Application number: 17804117.4
(22) Date of filing: 14.11.2017
(51) Int. Cl.: A01C 7/02, A01C 15/02, E01C 19/20

(54) **HANDHELD APPARATUS FOR SPREADING MATERIAL**
HANDGEHALTENER APPARAT ZUM AUSSTREUEN VON MATERIAL
APPAREIL PORTABLE POUR L'ÉPANDAGE DE MATÉRIAU

(30) Priority: 23.11.2016 DE 102016013943; 21.07.2017 DE 102017006858
(43) Date of publication of application: 02.10.2019
(73) Proprietor: Husqvarna AB, 561 82 Huskvarna (SE)
(72) Inventor: PHILLIPS-NICK, Patricia, 89287 Bellenberg (DE); MOCK, Axel, 89134 Blaustein (DE); SCHNEIDER, Regina, 89250 Senden (DE)
(74) Representative: Finkele, Rolf
(86) International application number: PCT/EP2017/079117
(87) International publication number: WO 2018/095758

(56) References cited:
- WO-A1-92/02120
- US-A- 3 227 461
- US-A- 5 271 568
- US-A- 5 305 699

## Description

### TECHNICAL FIELD

The present invention relates to spreader apparatuses, and more particularly to a handheld apparatus for spreading materials.

### BACKGROUND

Spreader apparatuses are generally used for spreading and distributing materials, including, but not limited to, fertilizer and seeds on surfaces like, lawns, farm land etc. A spreader apparatus typically includes a bucket member, a dispensing opening, and an actuating handle. The bucket member stores the material to be distributed. The dispensing opening is provided on a bottom side of the bucket member. The actuating handle is disposed on the bucket member to rotate a rotating member within the bucket member. Further, a housing member having a spreader plate is attached to the bucket member. Rotation of the actuating handle rotates the rotating member and the spreading plate. Owing to such rotation of the rotating member and the spreading plate, the material of the bucket member passes through the dispensing opening to get dispensed out of the bucket member. Since the spreader apparatus is employed for spreading material having particles with varying sizes and hardness, the particles may get stuck at the housing member often between the spreader plate and the housing member. This may lead to jamming of the rotating member and stopping or hindering of flow of the material from the bucket member.

Further, the dispensing opening is positioned such that the material tends to fall directly below the spreader apparatus. Since the spreader apparatus may be operated by an operator or user, the material may often fall on feet of the operator/user, during its usage. This may lead to wastage of the spreading material, and inconvenience during operation of the spreader apparatus, causing reduced efficiency of the operator or user.

The US Patent number US 5,305,699 (hereinafter referred to as the patent '699) discloses a portable seeder having a two section turning plate. The portable seeder is adapted for agricultural cultivation of seedlings. The seeder includes a turning plate driven by a transmission mechanism having a two-section structure including concentrically disposed inner and outer sections. The seeder further includes a base mount disposed under the turning plate and provided with a number of through holes to permit the seeds falling under the turning plate to pass through.

The patent US 3,227,461 describes a handheld spreading apparatus comprising a bucket member configured to store the material to be dispensed. The bucket member includes a closable dispensing opening. An actuating member is disposed on the bucket member. Within a housing member there is a rotation member that is associated with the actuating member to receive rotary movement therefrom. The rotation member is disposed at a distance to the housing that is greater than the maximum size of the material to be dispensed, thus to allow the material to pass unrestricted. Below the rotating member there is a bottom wall. The periphery of the bottom wall constitutes a rim defining a second diameter that is larger than the first diameter of the rotating member.

### SUMMARY

In view of the above, it is an objective of the present invention to solve or at least reduce the problems discussed above. The objective is at least partially achieved according to claim 1 with a handheld apparatus for spreading material. According to the present invention, the handheld apparatus for spreading the material is provided. The handheld apparatus includes a bucket member configured to store the material. The bucket member includes a closable dispensing opening. The handheld apparatus further includes an actuating member disposed on the bucket member. The handheld apparatus further includes a housing member connected to the bucket member. The housing member includes a top wall, a bottom wall, a back wall and side walls connecting the top wall and the bottom wall. The handheld apparatus further includes a rotating member disposed within the housing member. The rotating member is operably associated with the actuating member to receive rotary movement therefrom. The rotating member includes a base plate having a first diameter and a plurality of blades disposed onto the base plate and disposed at a predefined distance from the housing member. The predefined distance is greater than maximum size of the material passing through the dispensing opening. The bottom wall includes at least one slot at a rear portion of the bottom wall that is covered by the back wall and the side walls. The bottom wall further includes one or more slots at a front portion of the bottom wall that is not covered by the back wall and the side walls. The bottom wall further includes a rim member encompassing the plurality of slots, defining a second diameter such that the second diameter is larger than the first diameter of the base plate of the rotating member. Thus this rim will protect the rotating member from damages caused from obstacles outside the handheld apparatus when accidentally running against them during the spreading process.

According to an aspect of the present invention, the at least one slot is having a first opening size and the one or more slots is having a second opening size, the second opening size is larger than the first opening size.

According to an aspect of the present invention, the plurality of slots is configured to have varying opening sizes.

According to an aspect of the present invention, the plurality of slots is in trapezoidal shape.

According to an aspect of the present invention, a lip portion is provided in the bottom wall extending radially from the back wall and towards the at least one slot of the plurality of slots.

According to an aspect of the present invention, the lip portion is adapted to be movable between a first position and a second position, to selectively vary a degree of opening of the at least one slot of the plurality of slots.

According to an aspect of the present invention, the at least one slot of the plurality of slots is fully opened when the lip portion is positioned at the first position, and wherein the at least one slot of the plurality of slots is fully closed when the lip portion is positioned at the second position.

According to an aspect of the present invention, the rotating member includes a peripheral end portion positioned at a predetermined distance from a central axis of the rotating member, and the peripheral end portion of the rotating member extends over the at least one slot of the plurality of slots.

According to an aspect of the disclosure, the peripheral end portion of the rotating member is aligned vertically from the lip portion of the housing member.

According to an aspect of the present invention, the rotating member is positioned at a predefined distance from the housing member, and wherein the predefined distance of the rotating member from the housing member is greater than size of the dispensing opening.

According to an aspect of the present invention, the housing member is detachably connected to the bucket member.

According to an aspect of the present invention, the actuating member is configured to be operated manually.

According to an aspect of the present invention, a handle is mounted on the bucket member, and wherein the handle is provided with a knob to selectively open the dispensing opening of the bucket member.

According to the present invention, the handheld apparatus is configured to dispense at least one of seeds, salt, fertilizers, sand, stones, ice melting granules, pesticides, insecticides, weed killer, herbicides, calcium chloride, granular soil amendment material, granular oil absorbent material dusting products, granular floor cleaning products.

Advantageously, the rim member encompassing the plurality of slots and defining the second diameter which is larger than the first diameter of the base plate of the rotating member protects the rotating member.

Advantageously, the plurality of slots is configured to allow non-spread material to free fall from the housing member preventing the non-spread material from being stuck between the top wall and the bottom wall of the housing member.

Advantageously, the rim member having larger diameter than the rotating member increases useful life of the rotating member of the handheld apparatus.

Advantageously, the peripheral end portion of the rotating member prevents falling of the material directly onto the slots provided in the rear portion of the bottom wall of the housing member.

### BRIEF DESCRIPTION OF THE DRAWINGS

The invention will be described in more detail with reference to the enclosed drawings, wherein:
FIG. **1** shows a perspective view of a handheld apparatus, according to an embodiment of the present invention;
FIG. **2** shows a top view of the handheld apparatus shown in FIG. **1**, according to an embodiment of the present invention;
FIG. **3** shows an exploded view of the handheld apparatus shown in FIG. **1**, according to an embodiment of the present invention;
FIG. **4** shows a sectional view of a portion of the handheld apparatus shown in FIGS. **1-3** along an axis **A-A'** (shown in FIG. **2**), according to an embodiment of the present invention;
FIG. **5** shows a bottom perspective view of the handheld apparatus shown in FIGS. **1-4**, according to an embodiment of the present invention;
FIG. **6** shows a perspective view of a handheld apparatus, according to another embodiment of the present invention;
FIG. **7** shows an exploded view of the handheld apparatus shown in FIG. **6**, according to another embodiment of the present invention;
FIG. **8** shows a sectional view of a portion of the handheld apparatus along an axis **B-B**' (shown in FIG. **6**), according to another embodiment of the present invention;
FIG. **9** shows a bottom perspective view of the handheld apparatus shown in FIG. **6**, according to another embodiment of the present invention;
FIG. **10** shows a magnified view of a portion "**E**" indicated in the FIG. **9**, according to another embodiment of the present invention;
FIG. **11** shows a bottom view of a bottom wall of a housing member of the handheld apparatus shown in FIGS. **6-10**, showing a movable lip portion in a first position according to another embodiment of the present invention;
FIG. **12** shows a bottom view of the bottom wall shown in FIG. **11**, showing the lip portion in an intermediate position according to another embodiment of the present invention; and
FIG. **13** shows a bottom view of the bottom wall shown in FIG. **11**, showing the lip portion in a second position according to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements. Wherever possible, the same reference numbers will be used throughout the drawings to refer to the same or the like parts.

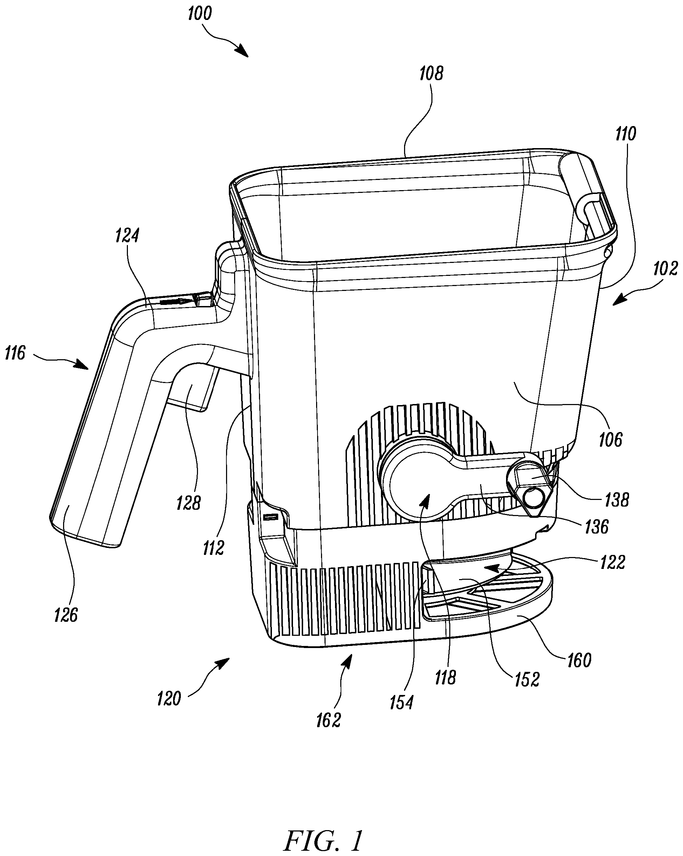

FIG. **1** illustrates a perspective view of a handheld apparatus **100**, according to an embodiment of the present invention. The handheld apparatus **100** may be used for spreading and/or distributing a material or a mixture of materials. In the present disclosure, the handheld apparatus **100** is embodied as a spreader apparatus which can be used for spreading and distributing the material at a farm or a garden or a lawn or paths or a terrain or any other target surface having such requirement of spreading and distributing material. The material may include seeds, salt, fertilizers, sand and stones or ice melting granules, pesticides, insecticides, weed killer, herbicide, calcium chloride, granular soil amendment material, granular oil absorbent material, grass seed, dusting products, granular floor cleaning products, any other material in granular form or particulate form of different sizes and shapes. The granules of the material may have a minimum size and a maximum size.

The handheld apparatus **100** includes a bucket member **102** adapted to contain the material. In an example, the bucket member **102** may have a cup shape or a cylindrical shape or any other shape known in the art, to carry the material (not shown) during operation of the handheld apparatus **100**. In another example, the bucket member **102** may have a circular cross sectional configuration, or a rectangular cross sectional configuration, or any other cross sectional configuration or shape known in the art. The configuration of the bucket member **102** defines a predefined volume for the material that may be contained in the bucket member **102**.

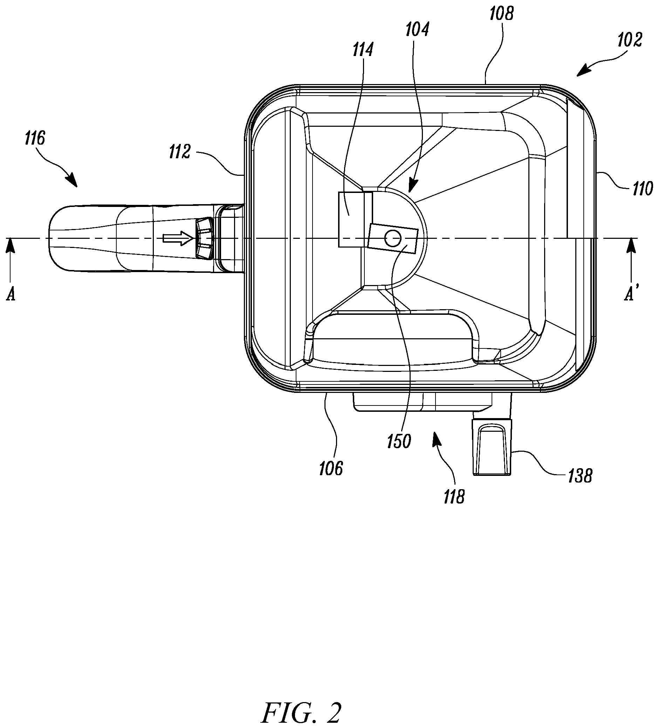

The bucket member **102** includes a base portion **104** (shown in FIG. **2**), and a plurality of exterior walls, such as a first side vertical wall **106**, a second side vertical wall **108**, a front vertical wall **110**, and a back vertical wall **112**. The first side vertical wall **106**, the second side vertical wall **108**, the front vertical wall **110**, and the back vertical wall **112** may be connected to each other and extended upwardly from the base portion **104**. In the disclosed embodiment, the first side vertical wall **106**, the second side vertical wall **108**, the front vertical wall **110**, and the back vertical wall **112** diverge upwardly from the base portion **104** to define an open top portion (not shown) opposite to the base portion **104**. The material to be distributed through the handheld apparatus **100** may be filled in the bucket member **102** through the open top portion. In an embodiment, the top portion may be configured to have a covering wall (not shown) to close the top portion.

The bucket member **102** further includes a closable dispensing opening **114** (shown in FIG. **2**, which illustrates a top view of the handheld apparatus **100**). The closable dispensing opening **114** also referred to as "dispensing opening **114**," is defined on the base portion **104** of the bucket member **102**. The dispensing opening **114** may have a predefined shape including, but not limited to, square, rectangular, circular or any other shape which aid in passage of the material from the bucket member **102**. In an example, the dispensing opening **114** may have a size bigger than the maximum size of the granules of the material contained in the bucket member **102**.

In an alternative embodiment, the bucket member **102** may include fewer or more number of walls defining the bucket member **102**. For example, if the bucket member **102** has cylindrical configuration or a circular configuration, one cylindrical outer wall (not shown) may extend upwardly from the base portion **104** to define the bucket member **102**.

FIG. **2** shows a top view of the handheld apparatus **100** shown in FIG. **1**, according to an embodiment of the present invention. Referring now to FIGS. **1** and **2**, the handheld apparatus **100** further includes a handle **116**, an actuating member **118**, a housing member **120** (shown in FIG. **1**) and a rotating member **122** (shown in FIG. 1). The actuating member **118** is disposed on the bucket member **102**. The housing member **120** is connected below the bucket member **102**. The rotating member **122** is disposed within the housing member **120** and positioned at a predefined distance from the housing member **120**. Further, the rotating member **122** is operably associated with the actuating member **118** to receive rotary movement. The predefined distance of the rotating member **122** from the housing member **120** may be greater than the maximum size of the material passing through the dispensing opening **114**.

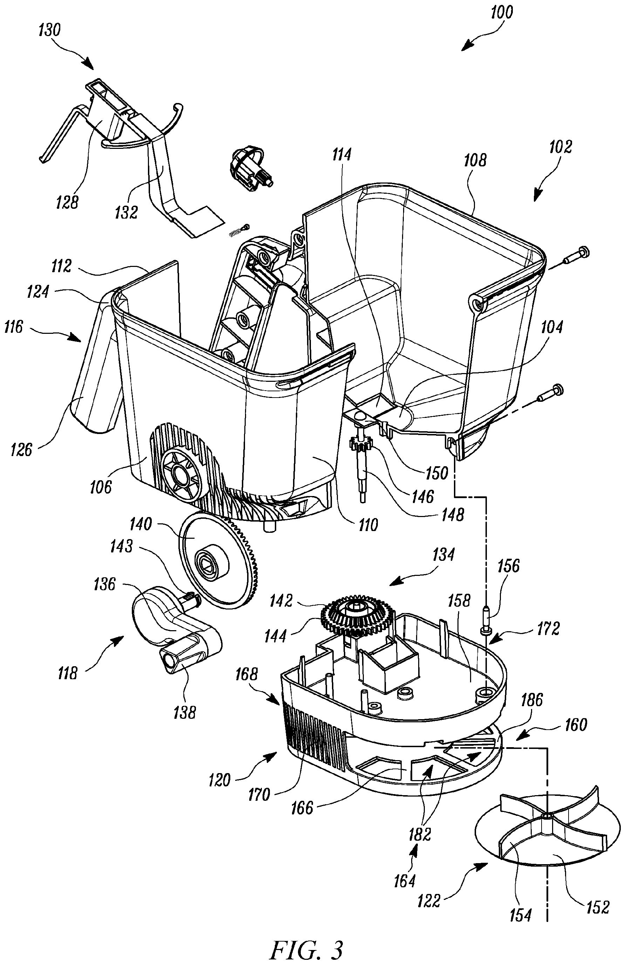

FIG. **3** illustrates an exploded view of the handheld apparatus **100** shown in FIG. **1**, according to an embodiment of the present invention. The handle **116** may be mounted on one of the exterior walls of the bucket member **102**. In the illustrated example, the handle **116** is mounted on the back vertical wall **112** of the bucket member **102**. In alternative example, the handle **116** may be mounted on any one of the first side vertical wall **106**, the second side vertical wall **108**, and the front vertical wall **110**, of the bucket member **102**. In one embodiment, the handle **116** may be detachably mounted on the back vertical wall **112** of the bucket member **102**. Alternatively, the handle **116** may be integral to the back vertical wall **112** of the bucket member **102**.

The handle **116** includes a first portion **124** and a second portion **126**. The first portion **124** of the handle **116** is connected to the back vertical wall **112** of the bucket member **102** and the second portion **126** extends at an inclination therefrom. The handle **116** may have a tubular shape having a rectangular cross-section or a circular cross-section. In another embodiment, the handle **116** may be a recessed handle portion defined on the back vertical wall **112** of the bucket member **102**. The handle **116** may enable the user to hold the handheld apparatus **100** with just one hand.

The handle **116** may be provided with a knob **128** to selectively open and close the dispensing opening **114** of the bucket member **102**. Specifically, the knob **128** is a part of a locking mechanism **130** which also includes a closure member **132** connected to the knob **128**. The locking mechanism **130** may be operated to selectively open and close the dispensing opening **114** of the bucket member **102**. In an example, actuation of the knob **128** may move the closure member **132** to conceal the dispensing opening **114** to stop the passage of the material to the dispensing opening **114**. Further, the actuation of the knob **128** may also move the closure member **132** to open the dispensing opening **114** to allow the passage of the material to the dispensing opening **114**. In the same example, a marginal actuation of the knob **128** may move the closure member **132** slightly, to partially conceal the dispensing opening **114** to allow the passage of a small amount or quantity of the material through the dispensing opening **114**.

As shown in the FIGS. **1**, **2** and **3**, the actuating member **118** is adapted to connect with the bucket member **102**. In one embodiment, the actuating member **118** may be configured to be operated manually by the user to rotate the rotating member **122**. Alternatively, the actuating member **118** may be operated electrically through a motor (not shown) to rotate the rotating member **122**. The actuating member **118** may be disposed on the first side vertical wall **106** of the bucket member **102**.

As illustrated, the actuating member **118** is operably associated with the rotating member **122** through a gear arrangement **134**, to receive rotary movement from the actuating member **118**. The actuating member **118** may include a lever **136** and a gripping member **138** connected to the lever **136**. The gripping member **138** may be rotated, to rotate the lever **136** for providing a rotatory movement to the rotating member **122**.

The gear arrangement **134** includes a bevel gear **140**, a bevel pinion **142**, a gear **144**, a pinion **146**, a vertically extending drive shaft **148**, and an impeller **150**. The lever **136** of the actuating member **118** is connected to the bevel gear **140**, through a clipping member **143**. The bevel gear **140** is disposed behind the first side vertical wall **106**. The bevel gear **140** is in meshing engagement with the bevel pinion **142** and drives the bevel pinion **142**. The bevel pinion **142** is integral to the gear **144**. Therefore, the gear **144** rotates with rotation of the bevel pinion **142**. Further, the gear **144** is in meshing engagement with the pinion **146** which is mounted on the vertically extending drive shaft **148**. The impeller **150** is also mounted on the vertically extending drive shaft **148**. Furthermore, the rotating member **122** is mounted on the vertically extending drive shaft **148**.

In an embodiment, the rotating member **122** may be operably associated with the actuating member **118** through a belt arrangement (not illustrated), to receive rotary movement from the actuating member **118**. In alternative embodiments, the rotating member **122** may be operably associated with the actuating member **118** through any other mechanical arrangement known in the art.

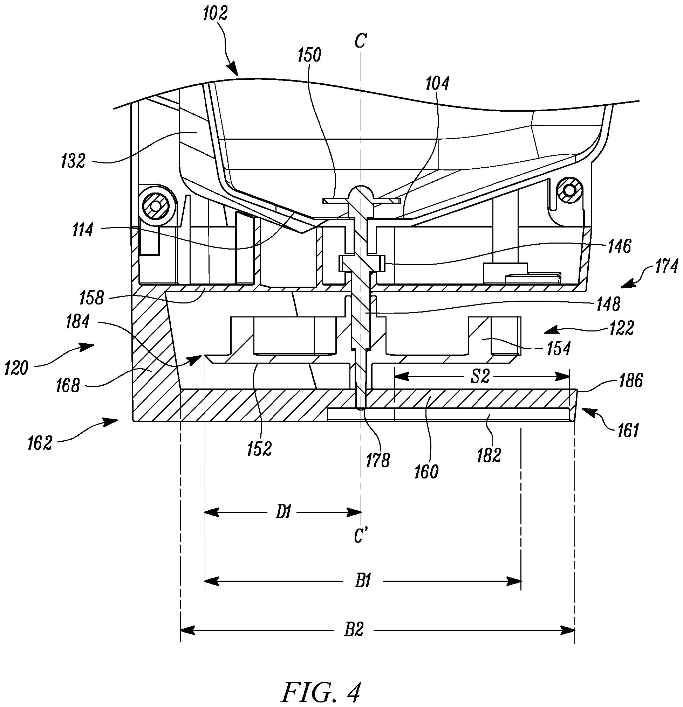

As illustrated, the rotating member **122** includes a base plate **152** having a first diameter **"B1"** (shown in FIG. **4**) and a plurality of blades **154** extending outwardly from a center of the base plate **152** and disposed onto the base plate **152**. The plurality of blades **154** may have a curved profile. In alternative embodiments, the plurality of blades **154** may have a straight or twisted, or any other profile. In an embodiment, the plurality of blades **154** may have a flexible end portions (not shown) which may aid in preventing physical damage to the material such as seeds being distributed using the handheld apparatus **100**. The plurality of blades **154** have a predetermined height from the base plate **152** which aid in spreading the material. Although the illustrated FIG. **3** show four blades in the rotating member **122**, the rotating member **122** in alternative embodiments, may include fewer or more number of blades, based on factors including but not limited to, size of the material to be spread, rate of spreading or quantity of the material to be spread. In an embodiment, the base plate **152** may include a resilient layer (not shown) on a surface onto which the material is fallen from the dispending opening **114**. The resilient layer may aid in preventing physical damage to the material such as seeds.

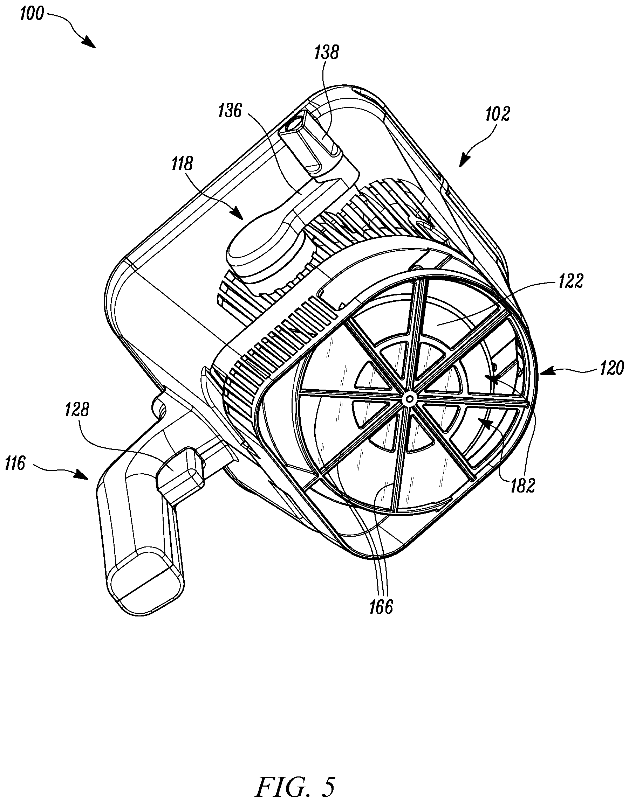

Referring now to FIGS. **4** and **5**, the housing member **120** is mounted to the base portion **104** of the bucket member **102**. In an embodiment, the housing member **120** may be detachably connected to the base portion **104** of the bucket member **102** through a plurality of bolts **156** (shown in FIG. **3**). Alternatively, the housing member **120** may be detachably connected to the base portion **104** of the bucket member **102** through any other fastening means including, but not limited to, a snap lock mechamisn (not shown) and a threading mechanism (not shown) etc.

The housing member **120** includes a top wall **158**, a bottom wall **160** below the top wall **158**, a back wall **168** and side walls **162** connecting the top wall **158** and the bottom wall **160**. The back wall **168** is located proximal to the handle **116** of the handheld apparatus **100**. The side walls **162** further includes a first side wall **170** (shown in FIG. **3**) and a second side wall **172** (shown in FIG. **3**) extending forwardly from the back wall **168** and towards a front end **174** of the housing member **120**.

The housing member **120** further includes a plurality of slots **164** defined on the bottom wall **160** of the housing member **120**. The plurality of slots **164** are positioned below the rotating member **122**. Each slot of the plurality of slots **164** may be configured to be greater in size than the maximum size of the material. In the illustrated embodiment, the plurality of slots **164** is in trapezoidal shape. However, the plurality of slots **164** may be configured into shapes including, but not limited to, geometric shape of square or rectangular or circular or elliptical or triangular, or non-geometric shapes. The plurality of slots **164** is separated by a set of ribs **166**. The set of ribs **166** (shown in FIG. **3**) extend radially outwardly from a center **178** of the bottom wall **160**, to define the plurality of slots **164**. In the illustrated embodiment, the plurality of slots **164** includes one or more slots **182** disposed at a front portion **161** of the bottom wall **160**. The one or more slots **182** is configured to have a first opening size "**S1**", to allow non-spread material to free fall from the housing member **120** and onto a ground surface (not shown). The one or more slots **182** in the illustrated embodiment are in a semi-circular pattern on the bottom wall **160**. However, it is to be understood that the one or more slots **182** may be provided in any pattern on the bottom wall **160**. In an example, the one or more slots **182** may cover more than semi-circular portion of the bottom wall **160**. In another example, the one or more slots **182** may cover less than the semi-circular portion of the bottom wall **160**.

The bottom wall **160** further includes a rim member **186** encompassing the one or more slots **182** on the bottom wall **160**. The rim member **186** encompassing the one or more slots **182** defines a second diameter **"B2"**. The second diameter **"B2"** is adapted to be larger than the first diameter **"B1"** of the base plate **152** of the rotating member **122**. That is to say, in an example, firstly if the material during spreading operation of the handheld apparatus **100** by the rotating member **122** is not spread onto the ground surface and gets stuck in between the top wall **158** and the bottom wall **160**, the non-spread material is allowed to free fall through the one or more slots **182** of the bottom wall **160** of the housing member **120**. Secondly, since the bottom wall **160** with the rim member **186** is provided with the second diameter **"B2"** which is larger that the first diameter **"B1"** of the base plate **152** of the rotating member **122**, it protects the rotating member **122** from physical damage caused from obstacles outside the handheld apparatus **100** when accidentally running against them during the spreading process.

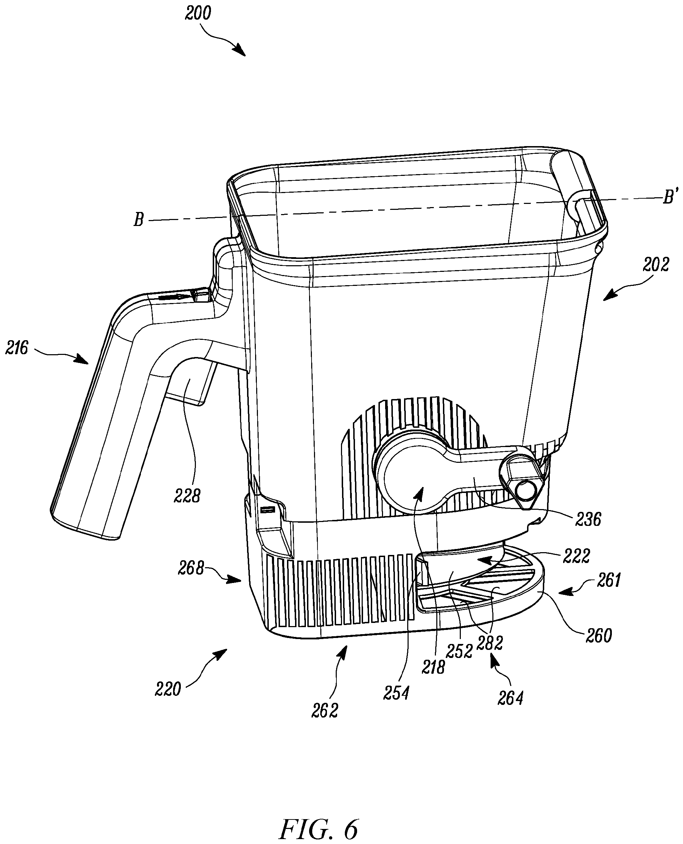

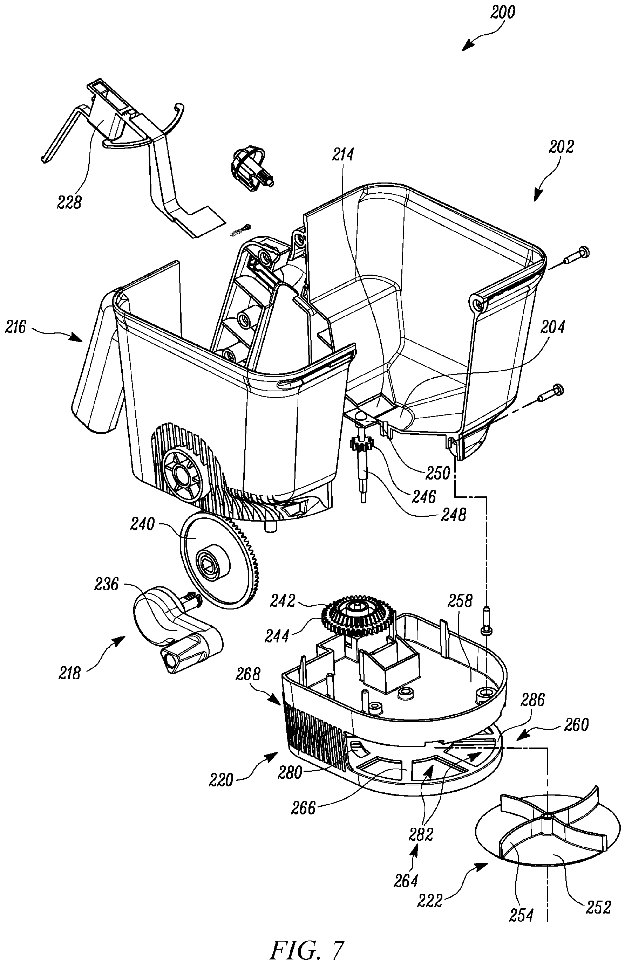

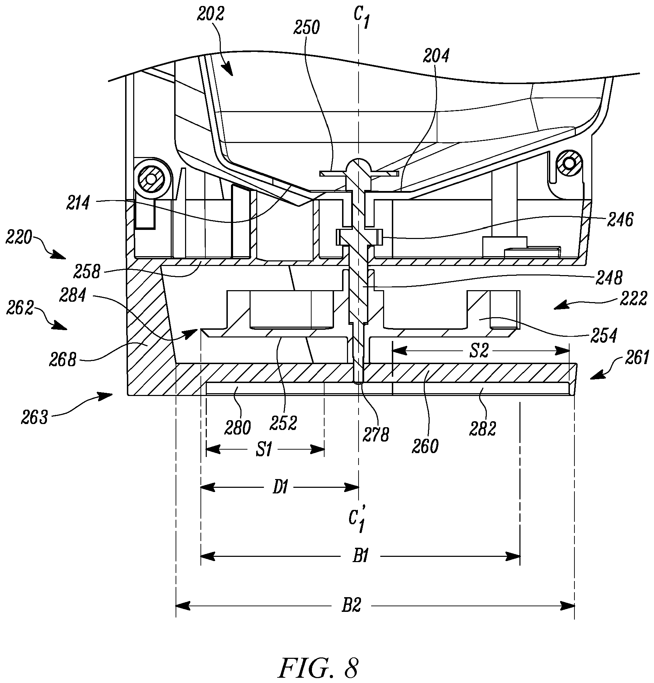

FIG. **6** illustrates a perspective view of a handheld apparatus **200**, according to another embodiment of the present invention. The handheld apparatus **200** is used for spreading and/or distributing a material or a mixture of materials. The handheld apparatus **200** includes a housing member **220** having a top wall **258** (shown in FIGS. **7** and **8**), a bottom wall **260** below the top wall **258**, a back wall **268** and side walls **262** connecting the top wall **258** and the bottom wall **260**. The housing member **220** further includes a plurality of slots **264** defined on the bottom wall **260** of the housing member **220**. The plurality of slots **264** are positioned below the rotating member **222**. Each slot of the plurality of slots **264** may be configured to be greater in size than the maximum size of the material. The plurality of slots **264** is separated by a set of ribs **266** (shown in FIG. **7**). The set of ribs **266** extend radially outwardly from a center **278** (shown in FIG. **8**) of the bottom wall **260**, to define the plurality of slots **264**.

In the illustrated embodiment, the plurality of slots **264** includes one or more slots **282** disposed at a front portion **261** of the bottom wall **260** and the at least one slot **280** at a rear portion **263** (shown in FIG. **8**) of the bottom wall **260**. The one or more slots **282** and the at least one slot **280** are configured to allow non-spread material to free fall from the housing member **220** and onto a ground surface (not shown).

Referring now to FIGS. **7****,** **8** and **9**, the housing member **220** may be mounted to the base portion **204** of the bucket member **202**. The housing member **220** may be detachably connected to the base portion **204** of the bucket member **202**. The housing member **220** may be detachably connected to the base portion **204** of the bucket member **202** through fastening means including, but not limited to, a snap lock mechamisn (not shown) and a threading mechanism (not shown) etc.

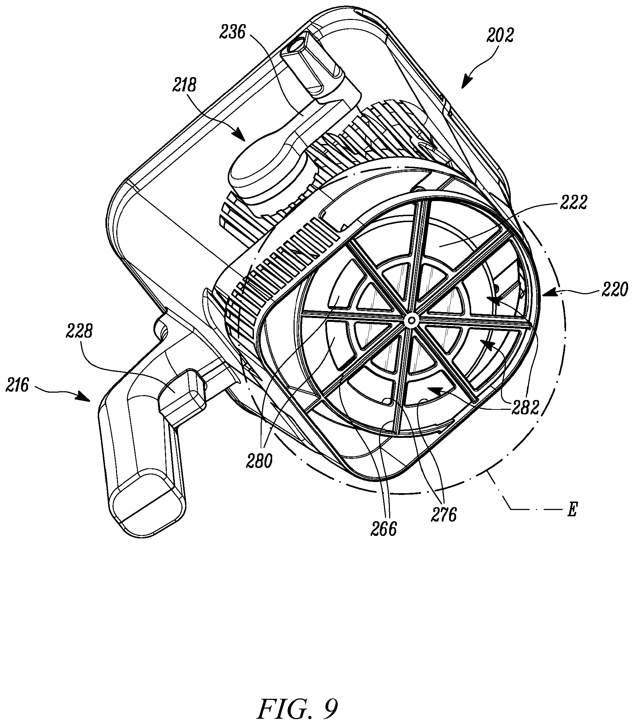

The housing member **220** further includes a lip portion **276** (shown in FIG. **9**) which is connected to the back wall **268** of the housing member **220**. The lip portion **276** is configured to be parallel with the bottom wall **260** of the housing member **220**. In the illustrated embodiment, the lip portion **276** is configured as an integral part extending from the back wall **268**. In an embodiment the lip portion **276** may be detachably connected with the back wall **268** of the housing member **220**. In another embodiment, the lip portion **276** is adapted to be movable to selectively vary a degree of opening of the at least one slot **280** of the plurality of slots **264**.

The plurality of slots **264** including the at least one slot **280** is having a first opening size "**S1**", and each of the one or more slots **282** have a second opening size "**S2**" such that the second opening size "**S2**" is bigger than the first opening size "**S1**" as shown in FIG. **8**. In an embodiment, the plurality of slots **264** is configured to have varying opening sizes.

As discussed earlier, the rotating member **222** is disposed within the housing member **220**, such that the top wall **258**, the bottom wall **260**, and the plurality of side walls **262** encompass the rotating member **222**. Further, the rotating member **222** includes a peripheral end portion **284** positioned at a predetermined distance "**D1**" from a central axis "**C₁-C₁**"' of the rotating member **222**, and the peripheral end portion **284** of the rotating member **222** extends over the at least one slot **280** of the plurality of slots **264**. That is to say, the peripheral end portion **284** of the rotating member **222** is having size greater than the first opening size "**S1**" of the at least one slot **280**. Further, the peripheral end portion **284** of the rotating member **222** is aligned vertically from the lip portion **276** of the housing member **220**. In the illustrated embodiment shown in the FIG. **8** the peripheral end portion **284** of the rotating member **222** is configured to be bigger than the lip portion **276** of the housing member **220**. Thus, the rotating member **222** encompasses the lip portion **276** of the housing member **220**. A predefined distance is provided between the rotating member **222** and each of the top wall **258**, the bottom wall **260** and the side walls **262**. In an embodiment, the predefined distance between the rotating member **222** with respect to each of the top wall **258**, the bottom wall **260** and the side walls **262** is greater than the maximum size of the material.

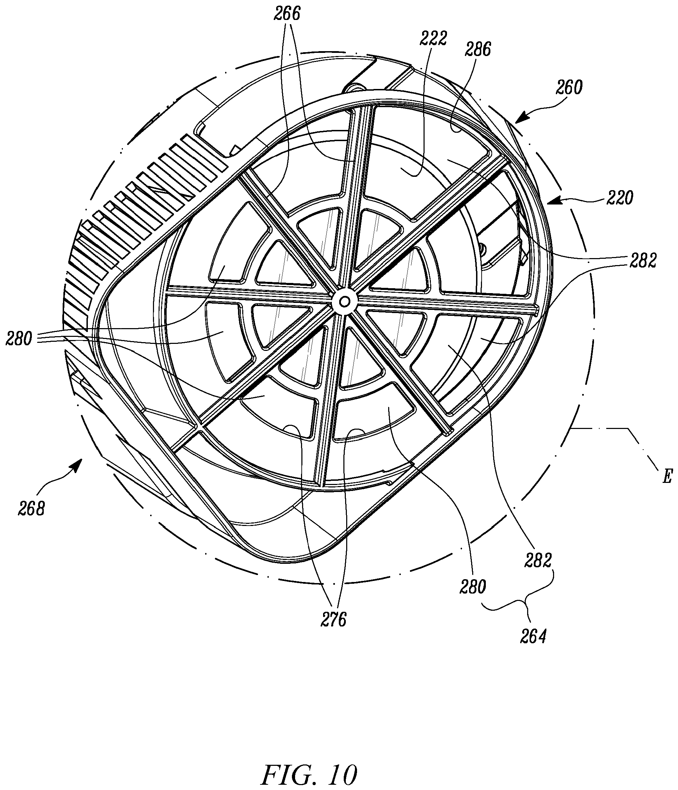

FIG. **10** illustrate a magnified view of a portion **"E"** indicated in the FIG. **9** according to an embodiment of the present invention. As illustrated, the plurality of slots **264** is defined on the bottom wall **260** of the housing member **220**. The at least one slot **280** and the one or more slots **282** are combined together to form the plurality of slots **264** of the housing member **220**. The at least one slot **280** are positioned proximate to the back wall **268** of the housing member **220**, and the one or more slots **282** are positioned distal from the back wall **268**. In an embodiment, each of the at least one slot **280** and the one or more slots **282** has four slots as illustrated in the FIGS. **9** and **10**. However, it is to be understood that the plurality of slots **264** in the housing member **220** may be fewer than four slots or more than four slots. The slots illustrated are an exemplary embodiment and is not meant to be limiting the scope of the present invention. The number of slots in the housing member **220** may be increased or decreased by considering the material size to be spread using the handheld apparatus **200**. In another embodiment the number of slots in the housing member **220** may be increased or decreased by considering the rate at which the material to be spread onto a ground surface.

In an embodiment, the lip portion **276** of the housing member **220** extends radially into the at least one slot **280** and thus making the at least one slot **280** having smaller size than the one or more slots **282**. In another embodiment, the lip portion **276** of the housing member **220** is configured to at least partially close the at least one slot **280**.

The one or more slots **282** in the illustrated embodiment are in a semi-circular pattern on the bottom wall **260**. However, it is to be understood that the one or more slots **282** may be disposed on any pattern on the bottom wall **260**.

The bottom wall **260** further includes a rim member **286** encompassing the one or more slots **282** on the bottom wall **260**. The rim member **286** encompassing the one or more slots **282** defines the second diameter **"B2"** (shown in FIG. **8**). The second diameter **"B2"** is adapted to be larger than the first diameter **"B1"** (shown in FIG. **8**) of the base plate **252** of the rotating member **222**. The rim member **286** having the second diameter **"B2"** is configured to be larger than the first diameter **"B1"** of the base plate **252** for protecting the rotating member **222**. That is to say, in an example, firstly if the material during spreading by the rotating member **222** is not spread and stuck in between the top wall **258** and the bottom wall **260**, the non-spread material is made to free fall through the at least one slot **280** and the one or more slots **282**. Secondly, since the bottom wall **260** with the rim member **286** is provided with the second diameter **"B2"** which is larger that the first diameter **"B1"** of the base plate **252** of the rotating member **222** it protects the rotating member **222** from physical damage caused from obstacles outside the handheld apparatus **200** when accidentally running against them during the spreading process.

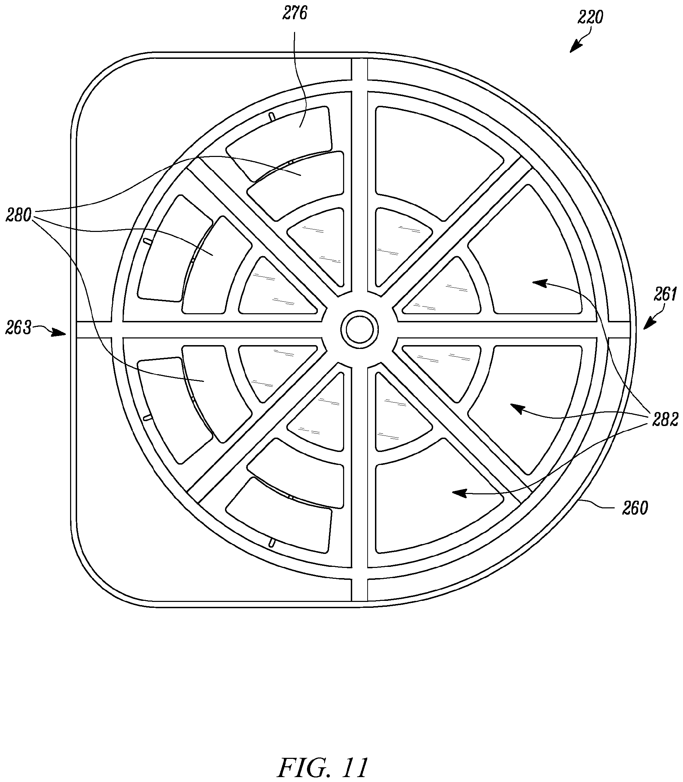

FIG. **11** illustrates a bottom view of the bottom wall **260** of the housing member **220** of the handheld apparatus **200** shown in FIGS. **6-****10**, showing the lip portion **276** in a first position according to another embodiment of the present invention. The lip portion **276** is defined to be in the first position when the at least one slot **280** of the plurality of slots **264** is fully opened by the lip portion **276**. In the illustrated embodiment, the lip portion **276** of the housing member **220** extends radially into the at least one slot **280** by moving the lip portion **276**. The lip portion **276** may be configured into a movable flap which can be slidable to vary the degree of opening of the first size opening of the at least one slot **280**. The movable flap may be operated manually by an operator or user. Thus making the at least one slot **280** having smaller size than the one or more slots **282** provided in the front portion **261**.

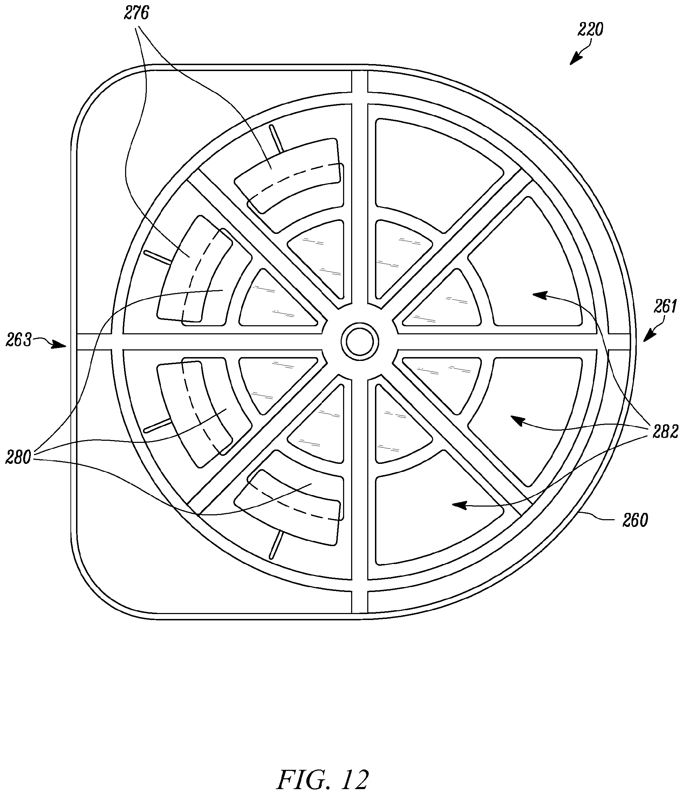

FIG. **12** illustrate a bottom view of the bottom wall **260** shown in FIG. **11**, showing the lip portion **276** in an intermediate position according to another embodiment of the present invention. In this embodiment, the lip portion **276** of the housing member **220** is configured to partially close the at least one slot **280** by slidably moving the lip portion **276**. The partial closing of the at least one slot **280** may be required if the grain size or size of the material being spread is smaller in size.

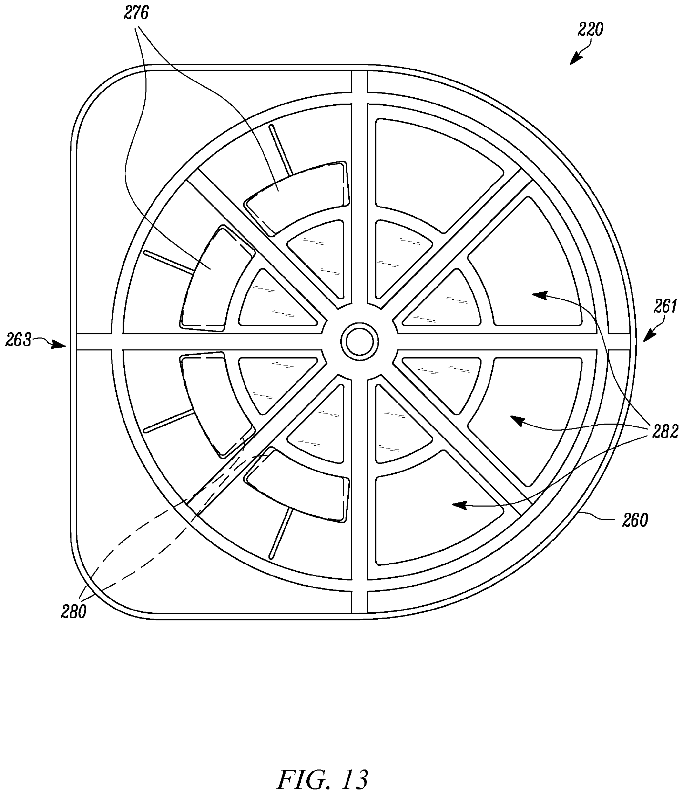

FIG. **13** illustrate a bottom view of the bottom wall **260** shown in FIG. **12**, showing the lip portion **276** in a second position according to another embodiment of the present invention. The lip portion **276** is defined to be in the second position when the at least one slot **280** of the plurality of slots **264** is fully closed by the lip portion **276**. In the illustrated embodiment, the lip portion **276** of the housing member **220** is configured to close the slots present at the rear portion **263** of the bottom wall **260**.

During utilisation of the handheld apparatus **100, 200** filled with the material having granules varying from the minimum size to the maximum size in the bucket member **102**, **202**, the lever **136, 236** of the actuating member **118, 218** is rotated. The handheld apparatus **100, 200** can be held by the user using the handle **116, 216**. When the lever 136, 236 is rotated using the knob **128, 228,** the bevel gear **140, 240** rotates, and the bevel pinion **142, 242** in meshing arrangement with the bevel gear **140, 242** also rotates. The bevel pinion **142, 242** rotates the gear **144, 244** which rotates the pinion **146, 246**. The vertically extending drive shaft **148, 248** rotates with the pinion **146, 246**. Further, since the impeller **150, 250** and the rotating member **122, 222** are mounted on the vertically extending drive shaft **148, 248** rotation of the vertically extending drive shaft **148, 248** also rotates the impeller **150, 250** and the rotating member **122, 222**. Due to such rotation of the impeller **150, 250** the material contained in the bucket member **102, 202** is agitated and induced to move.

The material contained in the bucket member **102, 202** flows through the dispensing opening **114, 214** towards the housing member **120, 220**. The rotating member **122, 222** positioned within the housing member **120, 220** also rotates with the vertically extending drive shaft **148, 248**. Further, the material passes through a gap (the predefined distance) between the rotating member **122, 222** and the top wall **158, 258** the bottom wall **160, 260** and the side walls **162, 262** of the housing member **120, 220**. Owing to the predefined distance between the rotating member **122, 222** and each of the top wall **158, 258** the bottom wall **160, 260** and the side walls **162, 262** of the housing member **120, 220** the material coming from the dispensing opening **114, 214** is allowed to pass therethrough. Since the predefined distance between the rotating member **122, 222** and the housing member **120, 214** is greater than the maximum size of the material passing through the dispensing opening **114, 214** any likelihood of material clogging in the rotating member **122** can be prevented. Further, any likelihood of damage to the rotating member **122, 222** and the housing member **120, 220** can also be prevented.

Subsequently, the material is allowed to pass through the plurality of slots **164, 264** of the housing member **120, 220**. Since the each slot of the plurality of slots **164** may be greater in size than the maximum size of the material passing through the dispensing opening **114, 214** any likelihood of material clogging in the housing member **120, 220** can be prevented.

The material contained in the bucket member **102, 202** flows through the dispensing opening **114, 214** towards the housing member **120, 220**. The rotating member **122, 222** positioned within the housing member **120, 220** also rotates with the vertically extending drive shaft **148, 248**. The material from the rotating member **122, 222** is made to fall onto the bottom wall **160, 260** of the housing member **120, 220**. The plurality of slots **164, 264** having the at least one slot **280** and the one or more slots **182, 282** configured on the bottom wall **160, 260** provide a passage way for the material to fall or spread onto a surface at a garden or a farm land. During the material falling through the at least one slot **280** the material is restricted from falling directly below, e.g., onto the user's or operator's foot. This is because the lip portion **276** of the housing member **120, 220** prevents a passage for the material. Specifically, as the peripheral end portion **184, 284** of the rotating member **122, 222** is positioned at the predetermined distance "**D1**" from the central axis "**C-C'** and **C₁-C₁'**" of the rotating member **122, 222** and extends over the at least one slot **280**, the material from the dispensing opening **114, 214** does not fall directly onto the at least one slot **280**. Thus preventing direct falling or spreading of the material from the bucket member **102, 202** onto the user's or operator's feet.

Further, the bottom wall **160, 260** including the rim member **186, 286** encompasses the plurality of slots **164, 264** on the bottom wall **160, 260,** defining the second diameter **"B2"**. More particularly, the rim member **186, 286,** encompasses the one or more slots **182, 282** on the bottom wall **160, 260**. The second diameter **"B2"** is adapted to be larger than the first diameter **"B1"** of the base plate **152, 252** of the rotating member **122, 222**. The rim member **186, 286** having the second diameter **"B2"** is configured to be larger than the first diameter **"B1"** of the base plate **152, 252** for protecting the rotating member **122, 222**. That is to say, in an example, firstly if the material during spreading operation of the handheld apparatus **100, 200** by the rotating member **122, 222** is not spread onto the ground surface (not shown) and gets stuck in between the top wall **158, 258** and the bottom wall **160, 260** the non-spread material is allowed to free fall through the one or more slots **182, 282** of the bottom wall **160, 260** of the housing member **120, 220**. Secondly, since the bottom wall **160, 260** with the rim member **186, 286** is provided with the second diameter **"B2"** which is larger that the first diameter **"B1"** of the base plate **152, 252** of the rotating member **122, 222** it protects the rotating member **122, 222** from physical damage caused from obstacles outside the handheld apparatus **100, 200** when accidentally running against them during the spreading process.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Handheld Apparatus
- 102: Bucket Member
- 104: Base Portion
- 106: First Side Vertical Wall
- 108: Second Side Vertical Wall
- 110: Front Vertical Wall
- 112: Back Vertical Wall
- 114: Closable dispensing Opening
- 116: Handle
- 118: Actuating Member
- 120: Housing Member
- 122: Rotating Member
- 124: First Portion
- 126: Second Portion
- 128: Knob
- 130: Locking Mechanism
- 132: Closure Member
- 134: Gear Arrangement
- 136: Lever
- 138: Gripping Member
- 140: Bevel Gear
- 142: Bevel Pinion
- 143: Clipping Member
- 144: Gear
- 146: Pinion
- 148: Vertically Extending Drive Shaft
- 150: Impeller
- 152: Base plate
- 154: Blades
- 156: Bolts
- 158: Top Wall
- 160: Bottom Wall
- 161: Front portion
- 162: Side walls
- 164: Plurality of slots
- 166: Ribs
- 168: Back wall
- 170: First side wall
- 172: Second side wall
- 174: Front end
- 178: Center
- 182: One or more slots
- 184: Peripheral end portion
- 186: Rim member
- 200: Handheld Apparatus
- 202: Bucket Member
- 204: Base Portion
- 214: Closable dispensing Opening
- 216: Handle
- 218: Actuating Member
- 220: Housing Member
- 222: Rotating Member
- 228: Knob
- 236: Lever
- 240: Bevel Gear
- 242: Bevel Pinion
- 244: Gear
- 246: Pinion
- 248: Vertically Extending Drive Shaft
- 250: Impeller
- 252: Base plate
- 254: Blades
- 258: Top Wall
- 260: Bottom Wall
- 261: Front portion
- 262: Side walls
- 263: Rear portion
- 264: Plurality of slots
- 266: Ribs
- 268: Back wall
- 276: Lip portion
- 278: Center
- 280: At least one slot
- 282: One or more slots
- 284: Peripheral end portion
- 286: Rim member
- B1: First diameter
- B2: Second diameter
- D1: Predetermined distance
- E: Portion
- S1: First opening size
- S2: Second opening size
- A-A': Axis
- B-B': Axis
- C-C': Central axis
- C₁-C₁': Central axis

## Claims

1. A handheld apparatus (**100, 200**) for spreading a material, with the material being seeds, salt, fertilizers, sand, stones, ice melting granules, pesticides, insecticides, weed killer, herbicides, calcium chloride, granular soil amendment material, granular oil absorbent material dusting products or granular floor cleaning products,
the handheld apparatus (**100, 200**) comprising:
a bucket member (**102, 202**) configured to store the material, the bucket member (**102, 202**) includes a closable dispensing opening (**114, 214**);
an actuating member (**118,** 218) disposed on the bucket member (**102, 202**);
a housing member (**120, 220**) connected to the bucket member (**102, 202**), the housing member (**120, 220**) includes a top wall (**158, 258**), a bottom wall (**160, 260**), a back wall (**168, 268**) and side walls (**162, 262**) connecting the top wall (**158, 258**) and the bottom wall (**160, 260**);
a rotating member (**122, 222**) disposed within the housing member (**120, 220**), the rotating member (**122, 222**) is operably associated with the actuating member (**118, 218**) to receive rotary movement therefrom, the rotating member (**122, 222**) includes a base plate (**152, 252**) having a first diameter (**B1**) and a plurality of blades (**154, 254**) disposed onto the base plate (**152,** 252) and disposed at a predefined distance from the housing member (**120, 220**), the predefined distance is greater than maximum size of the material passing through the dispensing opening (**114, 214**);
the bottom wall (**160, 260**) comprising a rim member (**186, 286**) defining a second diameter (**B2**) such that the second diameter (**B2**) is larger than the first diameter (**B1**) of the base plate (**152, 252**) of the rotating member **characterized in that,**
the bottom wall (**160, 260**) comprising at least one slot (**280**) at a rear portion (**263**) of the bottom wall (**160, 260**) that is covered by the back wall (**168, 268**) and the side walls (**162, 262**),
the bottom wall (**160, 260**) further comprising:
one or more slots (**182, 282**) at a front portion (**161, 261**) of the bottom wall (**160, 260**) that is not covered by the back wall (**160, 260**) and the side walls (**162, 262**); and
the rim member (**186, 286**) encompassing the plurality of slots (**164, 264**).

2. The handheld apparatus (**100, 200**) according to claim 1, wherein the at least one slot (**280**) is having a first opening size (**S1**) and the one or more slots (**182, 282**) is having a second opening size (**S2**), the second opening size (**S2**) is larger than the first opening size (**S1**).

3. The handheld apparatus (**100, 200**) according to any of the preceding claims, wherein the plurality of slots (**164, 264**) is configured to have varying opening sizes.

4. The handheld apparatus (**100, 200**) according to any of the preceding claims, wherein the plurality of slots (**164, 264**) is in trapezoidal shape.

5. The handheld apparatus (**200**) according to claim 2, wherein a lip portion (**276**) is provided in the bottom wall (**260**) extending radially from the back wall (**268**) and towards the at least one slot (**280**) of the plurality of slots (**264**).

6. The handheld apparatus (**200**) according to claim 5, wherein the lip portion (**276**) is adapted to be movable between a first position and a second position, to selectively vary a degree of opening of at least one slot (**280**) of the plurality of slots (**264**).

7. The handheld apparatus (**200**) according to claim 6, wherein the at least one slot (**280**) of the plurality of slots (**264**) is fully opened when the lip portion (**276**) is positioned at the first position, and wherein the at least one slot (**280**) of the plurality of slots (**264**) is fully closed when the lip portion (**276**) is positioned at the second position.

8. The handheld apparatus (**100, 200**) according to claim 1, wherein the rotating member (**122, 222**) includes a peripheral end portion (**184, 284**) positioned at a predetermined distance (**D1**) from a central axis (**C-C', C₁-C₁'**) of the rotating member (**122, 222**), and the peripheral end portion (**184, 284**) of the rotating member (**122, 222**) extends over the at least one slot (**280**) of the plurality of slots (**164, 264**).

9. The handheld apparatus (**100, 200**) according to claim 1, wherein the rotating member (**122, 222**) is positioned at a predefined distance from the housing member (**120, 220**), and wherein the predefined distance of the rotating member (**122, 222**) from the housing member (**120, 220**) is greater than size of the dispensing opening.

10. The handheld apparatus (**100, 200**) according to claim 1, wherein the housing member (**120, 220**) is detachably connected to the bucket member (**102, 202**).

11. The handheld apparatus (**100, 200**) according to claim 1, wherein the actuating member (**118, 218**) is configured to be operated manually.

12. The handheld apparatus (**100, 200**) according to claim 1, wherein a handle (**116, 216**) is mounted on the bucket member (**102, 202**), and wherein the handle (**116, 216**) is provided with a knob (**128, 228**) to selectively open the dispensing opening (**114, 214**) of the bucket member (**102, 202**).

## Patentansprüche

1. Handgeführtes Gerät (100, 200) zum Verteilen eines Materials, wobei das Material Saatgut, Salz, Düngemittel, Sand, Steine, Eisschmelzgranulat, Pestizide, Insektizide, Unkrautvernichtungsmittel, Herbizide, Kalziumchlorid, granulares Bodenverbesserungsmaterial, granulares ölabsorbierendes Material, Bestäubungsprodukte oder granulare Bodenreinigungsprodukte ist,
wobei das handgeführte Gerät (100, 200) umfasst:
ein Eimerelement (102, 202), das zum Speichern des Materials eingerichtet ist, wobei das Eimerelement (102, 202) eine verschließbare Ausgabeöffnung (114, 214) aufweist;
ein Betätigungselement (118, 218), das auf dem Eimerelement (102, 202) angeordnet ist;
ein Gehäuseelement (120, 220), das mit dem Eimerelement (102, 202) verbunden ist, wobei das Gehäuseelement (120, 220) eine obere Wand (158, 258), eine Bodenwand (160, 260), eine Rückwand (168, 268) und Seitenwände (162, 262), die die obere Wand (158, 258) und die untere Wand (160, 260) verbinden, aufweist;
ein Drehelement (122, 222), das innerhalb des Gehäuseelements (120, 220) angeordnet ist, wobei das Drehelement (122, 222) bedienbar mit dem Betätigungselement (118, 218) verbunden ist, um von diesem eine Drehbewegung aufzunehmen, wobei das Drehelement (122, 222) eine Grundplatte (152, 252) mit einem ersten Durchmesser (B1) und eine Vielzahl von Klingen (154, 254) aufweist, die auf der Grundplatte (152, 252) und in einem vordefinierten Abstand von dem Gehäuseelement (120,220) angeordnet sind, wobei der vordefinierte Abstand größer ist als die maximale Größe des Materials, das durch die Ausgabeöffnung (114, 214) hindurchgeht;
wobei die Bodenwand (160, 260) ein Randelement (186, 286) umfasst, das einen zweiten Durchmesser (B2) definiert, so dass der zweite Durchmesser (B2) größer ist als der erste Durchmesser (B1) der Grundplatte (152, 252) des Drehelements,
**dadurch gekennzeichnet, dass**,
die Bodenwand (160, 260) mindestens einen Schlitz (280) an einem hinteren Abschnitt (263) der Bodenwand (160, 260) aufweist, der von der Rückwand (168, 268) und den Seitenwänden (162, 262) abgedeckt ist,
und die Bodenwand (160, 260) des Weiteren umfasst:
einen oder mehrere Schlitze (182, 282) an einem vorderen Abschnitt (161, 261) der Bodenwand (160, 260), die nicht von der Rückwand (160, 260) und den Seitenwänden (162, 262) bedeckt sind; und
das Randelement (186, 286) die Vielzahl von Schlitzen (164, 264) umgibt.

2. Handgeführtes Gerät (100, 200) nach Anspruch 1, wobei der mindestens eine Schlitz (280) eine erste Öffnungsgröße (S1) aufweist und der eine oder die mehreren Schlitze (182, 282) eine zweite Öffnungsgröße (S2) aufweisen, wobei die zweite Öffnungsgröße (S2) größer als die erste Öffnungsgröße (S1) ist.

3. Handgeführtes Gerät (100, 200) nach einem der vorstehenden Ansprüche, wobei die Vielzahl der Schlitze (164, 264) so eingerichtet ist, dass sie unterschiedliche Öffnungsgrößen haben.

4. Handgeführtes Gerät (100, 200) nach einem der vorhergehenden Ansprüche, wobei die Vielzahl der Schlitze (164, 264) trapezförmig ausgebildet ist.

5. Handgeführtes Gerät (200) nach Anspruch 2, wobei ein Lippenabschnitt (276) in der Bodenwand (260) vorgesehen ist, der sich radial von der Rückwand (268) und in Richtung des mindestens einen Schlitzes (280) der Vielzahl von Schlitzen (264) erstreckt.

6. Handgeführtes Gerät (200) nach Anspruch 5, wobei der Lippenabschnitt (276) so angepasst ist, dass er zwischen einer ersten Position und einer zweiten Position beweglich ist, um selektiv einen Öffnungsgrad von mindestens einem Schlitz (280) der Vielzahl von Schlitzen (264) zu variieren.

7. Handgeführtes Gerät (200) nach Anspruch 6, wobei der mindestens eine Schlitz (280) der Vielzahl von Schlitzen (264) vollständig geöffnet ist, wenn der Lippenabschnitt (276) in der ersten Position positioniert ist, und wobei der mindestens eine Schlitz (280) der Vielzahl von Schlitzen (264) vollständig geschlossen ist, wenn der Lippenabschnitt (276) in der zweiten Position positioniert ist.

8. Handgeführtes Gerät (100, 200) nach Anspruch 1, wobei das Drehelement (122, 222) einen peripheren Endabschnitt (184, 284) miteinschließt, der in einem vorbestimmten Abstand (D1) von einer Mittelachse (C-C, C₁-C₁') des Drehelements (122, 222) positioniert ist, und wobei sich der periphere Endabschnitt (184, 284) des Drehelements (122, 222) über den mindestens einen Schlitz (280) der Vielzahl von Schlitzen (164, 264) erstreckt.

9. Handgeführtes Gerät (100, 200) nach Anspruch 1, wobei das Drehelement (122, 222) in einem vordefinierten Abstand von dem Gehäuseelement (120, 220) positioniert ist, und wobei der vordefinierte Abstand des Drehelements (122, 222) von dem Gehäuseelement (120, 220) größer als die Größe der Ausgabeöffnung ist.

10. Handgeführtes Gerät (100, 200) nach Anspruch 1, wobei das Gehäuseelement (120, 220) lösbar mit dem Eimerelement (102, 202) verbunden ist.

11. Handgeführtes Gerät (100, 200) nach Anspruch 1, wobei das Betätigungselement (118, 218) so eingerichtet ist, dass es manuell bedient werden kann.

12. Handgeführtes Gerät (100, 200) nach Anspruch 1, wobei ein Griff (116, 216) an dem Eimerelement (102, 202) angebracht ist, und wobei der Griff (116, 216) mit einem Knopf (128, 228) versehen ist, um die Ausgabeöffnung (114, 214) des Eimerelements (102, 202) selektiv zu öffnen.

## Revendications

1. Appareil portable (**100, 200**) pour l'épandage de matériau, le matériau étant des graines, des engrais, du sable, des pierres, des granules de dégel, des pesticides, des insecticides, des herbicides, du chlorure de calcium, un matériau granulaire d'amendement de sol, un matériau granulaire absorbant de l'huile, des produits de dépoussiérage ou des produits granulaires de nettoyage des sols, l'appareil portable (**100, 200**) comprenant :
un élément de seau (**102, 202**) configuré pour conserver le matériau, l'élément de seau (**102, 202**) inclut une ouverture de distribution verrouillable (**114, 214**) ;
un élément d'actionnement (**118, 218**) disposé sur l'élément de seau (**102, 202**) ;
un élément de logement (**120, 220**) relié à l'élément de seau (**102, 202**), l'élément de logement (**120, 220**) inclut une paroi supérieure (**158, 258**), une paroi inférieure (**160, 260**), une paroi postérieure (**168, 268**) et des parois latérales (**162, 262**) reliant la paroi supérieure (**158, 258**) et la paroi inférieure (**160, 260**) ;
un élément pivotant (**122, 222**) disposé au sein de l'élément de logement (**120, 220**), l'élément pivotant (**122, 222**) est associé de manière opérationnelle à l'élément d'actionnement (**118, 218**) pour recevoir un mouvement de rotation par celui-ci, l'élément pivotant (**122, 222**) inclut une plaque de base (**152, 252**) ayant un premier diamètre (**B1**) et une pluralité de pales (**154, 254**) disposées sur la plaque de base (**152, 252**) et disposées à une distance prédéfinie de l'élément de logement (**120, 220**), la distance prédéfinie est supérieure à la dimension maximale du matériau passant à travers l'ouverture de distribution (**114, 214**) ;
la paroi inférieure (**160, 260**) comprenant un élément de bord (**186, 286**) définissant un deuxième diamètre (**B2**) de sorte que le deuxième diamètre (**B2**) soit plus grand que le premier diamètre (**B1**) de la plaque de base (**152, 252**) de l'élément pivotant, **caractérisé en ce que,**
la paroi inférieure (**160, 260**) comprenant au moins une fente (**280**) en correspondance d'une partie postérieure (**263**) de la paroi inférieure (**160, 260**) qui est couverte par la paroi postérieure (**168, 268**) et les parois latérales (**162, 262**),
la paroi inférieure (**160, 260**) comprenant en outre :
une ou plusieurs fentes (**182, 282**) en correspondance d'une partie antérieure (**161, 261**) de la paroi inférieure (**160, 260**) qui ne sont pas couvertes par la paroi inférieure (**160, 260**) et les parois latérales (**162, 262**) ; et
l'élément de bord (**186, 286**) entourant la pluralité de fentes (**164, 264**).

2. Appareil portable (**100, 200**) selon la revendication 1, dans lequel l'au moins une fente (**280**) a une première dimension d'ouverture (**S1**) et l'une ou plusieurs fentes (**182, 282**) a une deuxième dimension d'ouverture (**S2**), la deuxième dimension d'ouverture (**S2**) est plus grande que la première dimension d'ouverture (**S1**).

3. Appareil portable (**100, 200**) selon l'une quelconque des revendications précédentes, dans lequel la pluralité de fentes (**164, 264**) sont configurées pour avoir des dimensions d'ouverture variables.

4. Appareil portable (**100, 200**) selon l'une quelconque des revendications précédentes, dans lequel la pluralité de fentes (**164, 264**) sont de forme trapézoïdale.

5. Appareil portable (**200**) selon la revendication 2, dans lequel une partie de lèvre (**276**) est fournie dans la paroi inférieure (**260**) s'étendant de manière radiale de la paroi postérieure (**268**) et vers l'au moins une fente (**280**) de la pluralité de fentes (**264**).

6. Appareil portable (**200**) selon la revendication 5, dans lequel la partie de lèvre (**276**) est adaptée pour être mobile entre une première position et une deuxième position, pour modifier sélectivement un degré d'ouverture d'au moins une fente (**280**) de la pluralité de fentes (**264**).

7. Appareil portable (**200**) selon la revendication 6, dans lequel l'au moins une fente (**280**) de la pluralité de fentes (**264**) est complètement ouverte lorsque la partie de lèvre (**276**) est positionnée dans la première position, et dans lequel l'au moins une fente (**280**) de la pluralité de fentes (**264**) est complètement fermée lorsque la partie de lèvre (**276**) est positionnée dans la deuxième position.

8. Appareil portable (**100, 200**) selon la revendication 1, dans lequel l'élément pivotant (**122, 222**) inclut une partie d'extrémité périphérique (**184, 284**) positionnée à une distance prédéterminée (**D1**) d'un axe central (**C-C'**, **C₁-C₁**) de l'élément pivotant (**122, 222**), et la partie d'extrémité périphérique (**184, 284**) de l'élément pivotant (**122, 222**) s'étend sur l'au moins une fente (**280**) de la pluralité de fentes (**164, 264**).

9. Appareil portable (**100, 200**) selon la revendication 1, dans lequel l'élément pivotant (**122, 222**) est positionné à une distance prédéfinie de l'élément de logement (**120, 220**), et dans lequel la distance prédéfinie entre l'élément pivotant (**122, 222**) et l'élément de logement (**120, 220**) est plus grande que la dimension de l'ouverture de distribution.

10. Appareil portable (**100, 200**) selon la revendication 1, dans lequel l'élément de logement (**120, 220**) est relié de manière amovible à l'élément de seau (**102, 202**).

11. Appareil portable **(100, 200**) selon la revendication 1, dans lequel l'élément d'actionnement (**118, 218**) est configuré pour être actionné de façon manuelle.

12. Appareil portable **(100, 200**) selon la revendication 1, dans lequel une poignée (**116,216**) est montée sur l'élément de seau (**102,202**), et dans lequel la poignée (**116, 216**) est munie d'un bouton (**128, 228**) pour ouvrir sélectivement l'ouverture de distribution (**114, 214**) de l'élément de seau (**102, 202**).
